(19) Europäisches Patentamt
European Patent Office
Office européen des brevets

(11) EP 1 835 272 A1

(12) EUROPEAN PATENT APPLICATION

(43) Date of publication:
19.09.2007 Bulletin 2007/38

(51) Int Cl.:
*G01L 1/20* (2006.01)    *G01L 1/18* (2006.01)
*H01H 3/14* (2006.01)    *H01H 13/70* (2006.01)
*G06F 3/033* (2006.01)

(21) Application number: 06114544.7

(22) Date of filing: 24.05.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 17.03.2006 LU 91230

(71) Applicant: IEE INTERNATIONAL ELECTRONICS &
ENGINEERING S.A.
6468 Echternach (LU)

(72) Inventors:
• Boulbitch, Alexei
54295 Trier (DE)
• Schoos, Aloyse
8094 Bertrange (LU)

(74) Representative: Beissel, Jean et al
Office Ernest T. Freylinger S.A.,
234, route d'Arlon,
B.P. 48
8001 Strassen (LU)

(54) **Pressure sensor**

(57) A pressure sensor comprises a first and a second terminal for connecting it to a read-out circuit, a resistive conductor and at least two pressure-actuatable switching elements. These at least two switching elements have different turn-on pressures, such that each of the at least two pressure-actuatable switching elements is in a substantially insulating state if an external pressure applied to the pressure sensor lies below the respective turn-on pressure and in a substantially conductive state if the external pressure applied to the pressure sensor lies above the respective turn-on pressure. The at least two pressure-actuatable switching elements and the resistive conductor are connected between the first and second terminal in such a way that an electrical resistance between the first and second terminal decreases when the pressure applied to the pressure sensor goes over one of the turn-on pressures.

## FIG. 1

EP 1 835 272 A1

**Description**

**Technical field**

The present invention generally relates to the field of pressure sensing, in particular to pressure sensors mapping pressure applied to them onto a measurable resistance.

**Background Art**

Pressure sensors are well known in the prior art and exist in a number of variants. Conventional pressure sensors are, for instance, configured as membrane sensors that comprise a first carrier film and a second carrier film arranged at a certain distance from each other by a spacer. The spacer comprises at least one opening defining an active area of the sensor. At least two electrodes and a layer of resistive material are arranged within the active area between the first and second carrier films in such a way that, in response to pressure acting on the active area of the membrane sensor, the first and second carrier films are pressed together against the reaction force of the elastic carrier films and an electrical contact is established between the at least two electrodes via the resistive material. The electrical resistance of the sensors thus varies as a function of pressure for applied pressures above the minimal pressure necessary for establishing the initial contact of the elastic carrier films. Such film-based sensors are e.g. known from US 2004/0163939 A1 or US 2004/0246094 A1.

**Technical problem**

It is an object of the present invention to provide a different pressure sensor. This object is achieved by a pressure sensor as claimed in claim 1.

**General Description of the Invention**

According to the present invention, a pressure sensor comprises a first and a second terminal for connecting it to a read-out circuit or any other electrical circuit, a resistive conductor and at least two pressure-actuatable switching elements. These at least two switching elements have different turn-on pressures, such that each of the at least two pressure-actuatable switching elements is in a substantially insulating state if an external pressure applied to the pressure sensor lies below the respective turn-on pressure and in a substantially conductive state if the external pressure applied to the pressure sensor lies above the respective turn-on pressure. Preferably, the turn-on pressures of the pressure-actuatable switching elements are all different one from another. The at least two pressure-actuatable switching elements and the resistive conductor are connected between the first and second terminal in such a way that an electrical resistance between the first and second terminal decreases when the pressure applied to the pressure sensor goes over one of the turn-on pressures. A connected read-out circuit can measure the resistance between the first and second terminal and thus, by using the pressure-resistance characteristic of the pressure sensor, the applied external pressure. The pressure sensor can of course also be combined with other electrical circuits or components. For instance, it could be connected in parallel or in series with a light emitting diode, a lamp, a touch screen or any other visual feedback device so that a variation of the electrical resistance between the terminals of the pressure sensor translates into a variation of a visual signal. Indeed, other feedback devices, like, for instance, audio or tactile feedback devices, can also be combined with the pressure sensor. It should be noted that the pressure-actuatable switching elements are binary switching elements, which means that each of them can switch only between the two mentioned states, depending on the pressure applied. The switching between the substantially conductive state and the substantially insulating state occurs at the turn-on pressure. The pressure-actuatable switching elements can be of any suitable type or configuration. In principle, membrane-type switching elements as discussed above with different turn-on pressures could be used. Nevertheless, there are other more preferred configurations that will be detailed hereinafter.

Those skilled in the art will appreciate that the number of pressure-actuatable switching elements as well as the intervals between the different turn-on pressures determine the measurement precision that can be achieved with the pressure sensor as well as its measurement range. By means of the resistive conductor, the applied external pressure can be mapped onto the resistance between the first and second terminals. This mapping provides a one-to-one relationship between the pressure intervals defined by the turn-on pressures and resistance intervals resulting from the interconnection of the resistive conductor with the pressure-actuatable switching elements.

Pressure variations of about 0.03 to 0.1 atm are considered being of special interest, since this range includes normal pressure variations developed by a human finger when pressing down a button. Preferably, the pressure sensor is configured for sensing variations of the applied pressure in this range. As, however, atmospheric pressure variations also typically lie in the mentioned range, measures may be taken, if appropriate, to prevent reaction of the pressure sensor upon the variations of the atmospheric pressure. (If however, one wants to sense the variations of atmospheric pressure with the pressure sensor, these measures are inappropriate.)

The pressure-actuatable switching elements can be implemented as individual components of the pressure sensor. In other embodiments, however, they can also be totally or partially integrated in a single unit. Concerning the relative arrangement of the pressure-actuatable switching elements, they can be arranged stacked one on top of the other or be disposed side by side. It should nevertheless be noted that the pressure-actuatable switching elements are arranged in such a way that the same external, or at least substantially the same external pressure acts on them.

According to a preferred aspect of the invention, each one of the pressure-actuatable switching elements comprises a respective pressure sensitive polymer patch, the pressure sensitive polymer patches having different pressure thresholds at which they become electrically conductive.

In the context of the present disclosure, the terms "pressure sensitive polymer layer" and "pressure sensitive patch" designate, a layer, respectively a patch, comprising or consisting essentially of a polymer or a blend of polymers that have an intrinsic electrical conductivity that changes as a function of applied pressure. Such a polymer or blend of polymers is herein referred to as "pressure sensitive polymer". It is worthwhile noting that it is the intrinsic electric conductivity of the pressure sensitive polymer that changes under pressure, i.e. the change in conductivity is due to changes on molecular level. This is in contrast to composite pressure-sensitive materials having electrically conductive particles embedded in an insulating matrix material. A layer or patch comprising or consisting essentially of a pressure sensitive polymer designates a layer or patch, whose electrical properties are significantly, respectively essentially determined by the pressure sensitive polymer. For the present disclosure, a pressure sensitive polymer layer or patch should not be limited a priori to a layer or patch consisting exclusively of a pressure sensitive polymer. In addition to pressure sensitive polymer, a pressure sensitive polymer layer or patch may comprise other substances or molecules, e.g. polymers in general, oligomers, monomers, non-polymeric substances such as phenolphthaleine, etc., which may help to adjust the properties of the pressure sensitive polymer layer or patch. The pressure sensitive polymer layer or patch has an electrical conductivity depending upon mechanical stress applied to the layer or patch surface. In most practical applications, such stress is applied normally to the surface of the pressure sensitive polymer layer or patch. For reasons of conciseness stress applied to the surface of the pressure sensitive polymer layer is herein generally referred to as "pressure". One should nevertheless keep in mind that components of the stress tensor other than the normal components may cause the same effect.

The curve representing the dependence of the conductivity of the pressure sensitive polymer layer or patch upon the applied pressure is s-shaped. At low pressure values, the pressure sensitive polymer layer or patch exhibits a low conductivity (typical for insulators) and at high pressure values it exhibits a high conductivity (typical for semiconductors or metals, depending on the pressure sensitive polymer layer under consideration). The conductivity thus increases over 6 to 9 orders of magnitude within a certain pressure interval. It is convenient to characterize this pressure interval by two pressure values, which could be referred to as "first and second pressure thresholds". Below the lower or first pressure threshold, the pressure sensitive polymer layer or patch has the conductivity of an insulator; above the higher or second pressure threshold, the conductivity of the pressure sensitive polymer layer or patch is that of a semiconductor or a metal. Between the said first and second thresholds, the pressure sensitive polymer layer undergoes a transition between the two conductivity states. Most of the pressure sensitive polymers presently known (such as polydiphenilenephthalide) possess relatively narrow transition intervals, i.e. the difference between the second and the first pressure thresholds is smaller than the value of the first threshold. In this case, it is convenient to characterise the pressure sensitive polymer layer by only one pressure threshold, $P_c$, chosen in the middle of the transition interval. It is in this sense that the term "pressure threshold" is used herein. In the vicinity of the pressure threshold $P_c$ the conductivity of the pressure sensitive layer or patch varies over 6 to 9 orders of magnitude, so that the conductivity as a function of pressure essentially behaves like a step function. Other pressure sensitive polymers may have a slower transition from the insulating state to the conductive state, i.e. the two thresholds are more spaced on a pressure axis.

Pressure sensitive polymers suitable for being used in the present invention have been disclosed e.g. in the patents of Miyadera et. al. (JP 2002-241591 A2), Tomono and Komatsu (JP 2004-013451 A2), Yusa and Miyadera (JP 2003317545 A2) and Lachinov and Salazkin (RU 2256967 and WO 2005/076289 A1). Further details can be found in the review articles by A. N. Lachinov et. al., Poly(phthalidylidenarylene)s: New Effects. - New Horizons of application, Synthetic Metals **71**, 2155-8 (1995) and S. N. Salazkin, Aromatic polymers based on pseudoacid chlorides, Polymer Science **B46**, 203-223 (2004). Pressure sensitive polymers materials with different pressure thresholds have been disclosed in reference JP 2002-2415591 A2. Indeed, the more pressure sensitive polymers with different pressure thresholds are available, the better the measurement precision that can be achieved with the pressure sensor.

According to another preferred aspect of the invention, the pressure-actuatable switching elements comprise a pressure sensitive polymer layer and an amplification structure, the pressure sensitive polymer layer having different zones associated with the resistive conductor. The amplification structure is arranged in such a way that, if an external pressure is applied to the pressure sensor, the different zones of the pressure sensitive polymer layer are exposed at least locally to different pressures increased by different amplification factors with respect to the external pressure, the amplification structure thus achieving different turn-on pressures. It shall be noted that the pressure threshold $P_c$ of the pressure sensitive polymer layer may be constant over the different zones. But as the amplification structure is configured so that to each zone of the pressure sensitive polymer layer corresponds an individual amplification factor, the effective turn-on pressure is different for each zone. As a result, different pressure-actuatable switching elements with different pressure thresholds are achieved. In a variant of this embodiment, the pressure-actuatable switching elements comprise at least two pressure sensitive polymer patches forming a pressure sensitive polymer layer and at least two amplification structures each of the pressure sensitive polymer patches and each of the amplification structures being associated with one of the switching elements. The amplification structures are then arranged in such a way that, if an external pressure is applied to the pressure sensor, the pressure sensitive polymer patches are exposed at least locally to different pressures increased by different amplification factors with respect to the external pressure. In this variant, the pressure-actuatable switching elements have individual pressure sensitive polymer patches, which may have the same pressure threshold. As, however, the amplification structures present different amplification factors, the different pressure-actuatable switching elements have different turn-on pressures.

It is worthwhile noting, though, that some (or all) of the individual pressure sensitive patches might also have different pressure thresholds. In this case, the amplifications structures could be used for achieving a finer distribution of the turn-on pressures on the pressure scale. In such a pressure sensor, the pressure-actuatable switching elements comprise at least two pressure sensitive polymer patches and at least one amplification structure. The pressure sensitive polymer patches have different pressure thresholds at which they become electrically conductive and each pressure sensitive polymer patch is associated with one of the switching elements. To at least one of the switching elements is associated an amplification structure. If there is more than one amplification structure, each one of them is associated to one of the switching elements. The combined use of pressure sensitive polymer patches with different pressure thresholds (not necessarily all different one from the other) and at least one amplification structure achieves the different turn-on pressures. Assuming, for instance, that a number $N_1$ of pressure sensitive polymers with different pressure thresholds (not two equal ones) are available as well as a number $N_2$ of amplification structures with different amplification factors (again not two equal ones, all different from unity). The number of different turn-on pressures in this case yields to maximally $N_1 x(N_2+1)$. Naturally, one might also choose the pressure sensitive polymer patches and configure the amplification structures in such a way that the resulting turn-on pressures are equidistant or nearly equidistant on the pressure scale.

The amplification structure preferably comprises a plate element and a plurality of bearing elements, the plate element being arranged facing away from the pressure sensitive polymer layer or patch, the bearing elements being arranged between the pressure sensitive polymer layer or patch and the plate element. These bearing elements have a cross-sectional area (in the plane parallel to that on which the external pressure acts) reduced with respect to the surface of the plate element. When an external pressure P acts on the pressure sensor the pressure or a reaction force are transmitted by the bearing elements to the pressure sensitive polymer layer or patch only on a surface reduced with respect to the surface of the plate element. The total force being given, the pressure acting on the reduced surface is increased. The amplifying structure may further comprise a soft filler material arranged between the bearing elements and having a lower Young's modulus than the bearing elements and the plate element. Those skilled will note that the requirement regarding Young's modulus ensures that the pressure is transmitted to the pressure sensitive polymer layer or patch preponderantly through the bearing elements and only to a lower extend through the filler material.

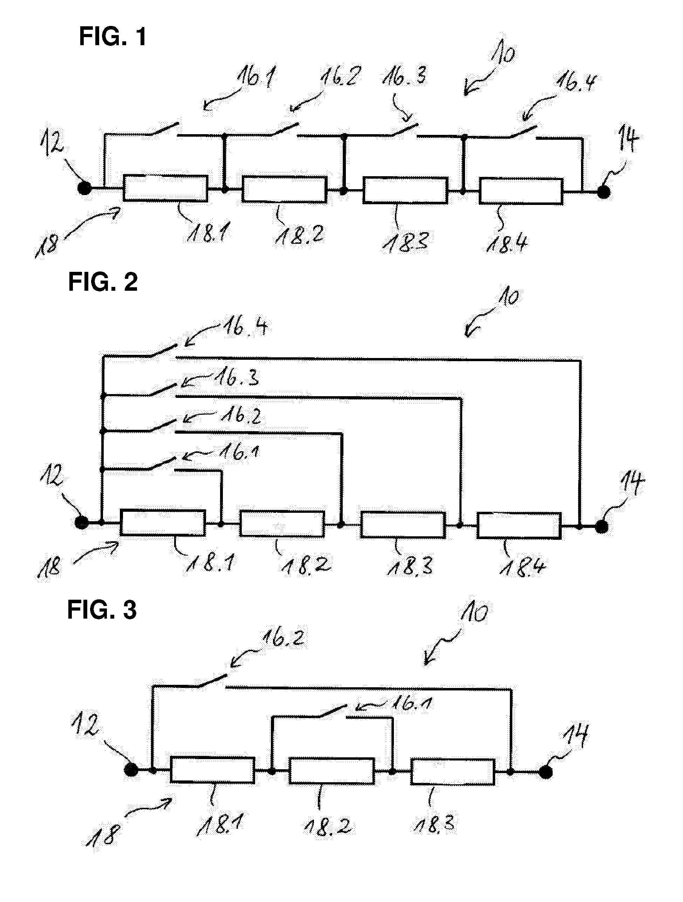

According to a first embodiment of the invention, the resistive conductor includes at least two resistive portions and the at least two pressure-actuatable switching elements are connected to the resistive conductor, each pressure-actuatable switching element being associated to a resistive portion in such a way that the resistive portion is shunted by the pressure-actuatable switching element if the pressure applied to the pressure sensor exceeds the respective turn-on pressure. Examples of electrical circuits corresponding to the first embodiment are shown in Figs. 1 to 3. The at least two resistive portions are preferably connected electrically in series between the first and second terminals, so that the resistance of the resistive conductor decreases when one or more of its resistive portions are shunted by the respective pressure-actuatable switching element or elements.

According to a preferred variant of the first embodiment, the pressure sensor comprises a series of at least three substantially parallel conductive layer electrodes arranged one above the other, each subsequent two of the conductive layer electrodes being resistively interconnected by one of the resistive portions of the resistive conductor and at least two pressure sensitive polymer layers, each one of the at least two pressure sensitive polymer layers having an individual pressure threshold at which it becomes electrically conductive and each one of the at least two pressure sensitive polymer layer being sandwiched between subsequent two of the conductive layer electrodes so as to form one of the at least two pressure-actuatable switching elements. In this embodiment, the pressure-actuatable switching elements are arranged one on top of the other. Except for the topmost and the bottommost ones, the conductive layer electrodes belong respectively to two of the switching elements.

According to another preferred variant of the first embodiment, such a pressure sensor comprises an elongated resistive electrode, the resistive electrode having a first end and a second end to which the first and second terminals are conductively connected and wherein the elongated resistive electrode includes the resistive portions to which the pressure-actuatable switching elements are associated. In particular, the pressure sensor may comprise an elongated conductive electrode extending substantially parallel to the elongated resistive electrode and at least two patches of pressure sensitive polymer sandwiched between the resistive electrode and the conductive electrode. In this preferred variant of the first embodiment, the patches of pressure sensitive polymer have different pressure thresholds at which they become electrically conductive and are each associated to a respective one of the at least two resistive portions in such a way that, the pressure sensitive polymer patches form, in association with the conductive electrode and the resistive electrode, the pressure-actuatable switching elements.

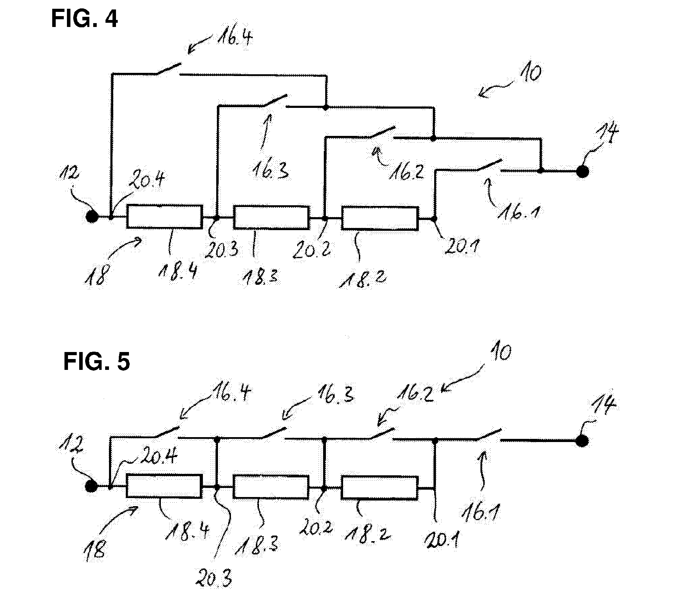

According to a second embodiment of the invention, the resistive conductor is connected to the first terminal and each of the at least two pressure-actuatable switching elements is connected between the second terminal and an individual connection location of the resistive conductor, the resistive conductor having, between the first terminal and the individual connection location, an effective electrical resistance such that, in terms of circuitry, the pressure-actuatable switching element is connected between the first and second terminal in series with the effective electrical resistance. The individual connection locations of the pressure-actuatable switching elements are such that the effective electrical resistances with which the at least two pressure-actuatable switching elements are connected in series are different. Thus, if the applied external pressure exceeds the turn-on pressure of a particular pressure-actuatable switching element, a current path exists between the first terminal, through a part of the resistive conductor and the switching element to the second terminal. If more than one pressure-actuatable switching element is actuated, i.e. in the substantially conducting state, there are more than one at least partially parallel current paths between the first and second terminals. As a consequence, the resistance measurable between the first and second terminals decreases if the applied external pressure exceeds one of the turn-on pressures. Examples of electrical circuits corresponding to the second embodiment are shown in Figs. 4 and 5.

According to an advantageous variant of the second embodiment, the resistive conductor comprises or consists of an elongated resistive electrode that includes the connection locations. The pressure-actuatable switching elements comprise at least one conductive electrode connected to the second terminal. Furthermore, each one of the pressure-actuatable switching elements comprises an intermediate electrode and a pressure sensitive polymer patch. The pressure sensitive polymer patches of the different pressure-actuatable switching elements have different pressure thresholds and the intermediate electrodes of the different pressure-actuatable switching elements are connected to different connection locations. In each one of the pressure-actuatable switching elements, the respective intermediate electrode is arranged so as to be conductively connected with the at least one conductive electrode through the respective pressure sensitive patch when an external pressure applied to the pressure sensor exceeds the turn-on pressure of the respective pressure-actuatable switching element.

According to another advantageous variant of the second embodiment, the resistive conductor comprises an elongated resistive electrode that includes the connection locations. The pressure-actuatable switching elements comprise at least one conductive electrode connected to the second terminal. In addition, each one of the pressure-actuatable switching elements comprises an intermediate electrode and an amplification structure. The intermediate electrodes of the different pressure-actuatable switching elements are connected to different connection locations, and the amplification structures are arranged in such a way that, if an external pressure is applied to the pressure sensor, the pressure sensitive polymer layer is exposed at least locally to different pressures increased by different amplification factors with respect to the external pressure, the amplification structures thus achieving different turn-on pressures for the different switching elements. In each one of the pressure-actuatable switching elements, the respective intermediate electrode is arranged so as to be conductively connected with the at least one conductive electrode through the pressure sensitive polymer layer when an external pressure applied to the pressure sensor exceeds the turn-on pressure of the respective pressure-actuatable switching element. It should be noted that the pressure sensitive polymer layer may, in this variant, be divided into a plurality of pressure sensitive polymer patches (with the same or different pressure thresholds), each pressure-actuatable switching element comprising one of these pressure sensitive polymer patches.

According to a preferred variant of the second embodiment, the resistive conductor comprises or consists of a resistive electrode conductively connected at its perimeter to the first terminal and the pressure sensor comprises a second electrode connected to the second terminal and at least two concentrically arranged pressure sensitive polymer patches sandwiched between the resistive electrode and the second electrode, the at least two pressure sensitive polymer patches having different pressure thresholds. The different pressure thresholds preferably increase from an innermost to an outermost of the at least two concentrically arranged pressure sensitive polymer patches. The second electrode may be a conductive electrode, or alternatively, a second resistive electrode.

The resistive electrode or electrodes may be substantially flower-shaped, i.e. have several petal-like portions extending radially from an innermost pressure sensitive polymer patch to the perimeter of the resistive electrode. The width of the petal-like portions in the direction transversal to the radial extension of the petal-like portions advantageously varies along the direction of the radial extension.

Regarding manufacturing of the discussed embodiments of pressure sensors, it should be noted that any suitable methods can be used. Preferably, however, the pressure sensor is produced by using printing techniques. The pressure sensitive polymer layer or patch may, for instance, be produced using a spin-coating method, a printing method, such as e.g. screen-printing, off-set printing, gravure printing, flexography printing and/or inkjet printing, or any other deposition method. Though any suitable method may be used, inkjet printing is preferred, since it allows forming layers with a well-defined thickness between about 50 nm and 5 to 10 micrometers in a single print. Higher thickness may be achieved by multiple prints. The achievable lateral resolution lies in the range of tens of micrometers, e.g. 1 pixel typically corresponds to 75 $\mu$m. If the pressure sensitive polymer disclosed in the patent WO 2005/076289 A1 is used, the thickness of the pressure sensitive polymer layer is preferentially comprised in the range between 1 and 30 $\mu$m. For any of the printing methods, any suitable ink based on the pressure sensitive material may be used. Such an ink would preferably comprise 0.5 to 5 wt.% of the pressure sensitive polymer, such as e.g. poly(diphenylenephthalide), poly(terphenylenephthalide), polyfluoronylenephthalide, polyarylenesulforphthalide, or any other suitable pressure-sensitive polymer, 95-99 wt.% of a solvent, such as e.g. cyclohexanone, nitrobenzene, chloroform or any other suitable solvent, and 0.001-0.1 wt.% of additives. Blends of pressure sensitive polymers as well as blends of one or more pressure sensitive polymers and other polymers can be used in the ink.

As concerns conductive electrodes, conductive layers or patches, layers or patches of conductive material, they can be made of bulk material, e.g. bulk metal, but preferably they are also formed using methods such as e.g. metal evaporation or chemical precipitation or a printing process, such as e.g. screen-printing, off-set printing, gravure printing, flexography printing and/or inkjet printing. The conductive electrodes, conductive layers or patches, layers or patches of conductive material may be e.g. be formed by screen printing using conductive inks, such as e.g. Acheson Electrodag PF-007, Acheson Electrodag PF-046 or DowCorning PI-2000, or by inkjet printing using silver inkjet inks, e.g. Cabot AG-IJ-150-FX, Cima Nanotech IJ 242/21, Tetenal Silver Fluid UV, Harima Chem. NanoPaste or any other suitable inks.

As concerns resistive electrodes, resistive layers, layers or patches of resistive material, they may be formed of any suitable resistive bulk material or by using any suitable application process, e.g. screen-printing, off-set printing, gravure printing, flexography printing and/or inkjet printing. Preferred resistive inks include, for instance, the Acheson Electrodag PM-007, Nicomatic LtD C-1 00 or Nicomatic LtD C-200 inks for screen printing as well as, for instance, Tetenal UV Resistor LR, Tetenal UV Resistor MR, Tetenal UV Resistor HR carbon inks for inkjet printing.

As concerns the amplification structures, they are preferably achieved using 3D inkjet printing techniques. In these printing techniques, the amplification structure is printed layer by layer. In order to fix the shapes of a freshly printed layer a pre-curing is preferably performed right after the deposition of each layer. Such pre-curing includes that the freshly printed layer is subjected to a dose of ultra-violet or infra-red light (depending on the ink used) that is substantially smaller then the dose normally used in the curing procedure. The plate element and the bearing elements of the amplification structure can e.g. be printed with Tetenal Silver Fluid UV silver inks. As soft filler material polyethylene would in this case be a suitable choice as this material complies with the requirement on Young's modulus mentioned above.

## Brief Description of the Drawings

Further details and advantages of the present invention will be apparent from the following detailed description of several not limiting embodiments with reference to the attached drawings, wherein:

Figs. 1-5 are several circuit diagrams of a pressure sensor according to the present invention;

Fig. 6 a cross sectional schematic view of a pressure sensor according to a preferred embodiment of the invention;

Fig. 7 is a partially exploded schematic view of a pressure sensor according to another preferred embodiment of the invention;

Fig. 8 is a cross sectional view of the pressure sensor of Fig. 7;

Fig. 9 is a partially exploded schematic view of a variant of the pressure sensor of Figs. 7 and 8;

Fig. 10 is a cross sectional view of a pressure sensor according to yet another preferred embodiment of the invention;

Fig. 11 is a plan view of a pressure sensor according to yet another preferred embodiment of the invention;

Fig. 12 is a cross sectional view along the line XII-XII in Fig. 11;

Fig. 13 is a cross sectional view of a pressure sensor according to a yet another preferred embodiment of the invention;

Fig. 14 is a partially exploded schematic view of a pressure sensor according to yet another preferred embodiment of the invention;

Fig. 15 is a horizontal cross sectional view of the pressure sensor of Fig. 14 at the height of the dashed line XV-XV;

Figs. 16 and 17 are plan views of variants of the pressure sensors of Figs. 14 and 15.

**Description of Preferred Embodiments**

Figs. 1-5 show different circuit diagrams of pressure sensors according to the present invention. The circuits 10 are connectable to a control unit (not shown) by means of a first terminal 12 and a second terminal 14. Each circuit 10 comprises a plurality of pressure-actuatable switching elements 16.1, 16.2, 16.3, 16.4 that present different turn-on pressures. A pressure-actuatable switching element 16.1, 16.2, 16.3, 16.4 remains in a substantially insulating state as long as the external pressure P applied to the switching element 16.1, 16.2, 16.3, 16.4 does not exceed its turn-on pressure. If, however, the external pressure P exceeds that turn-on pressure, the pressure-actuatable switching element 16.1, 16.2, 16.3, 16.4 goes into a substantially conductive state. The pressure-actuatable switching elements 16.1, 16.2, 16.3, 16.4 are arranged so as to be exposed to substantially the same external pressure P acting on the pressure sensor and connected to a resistive conductor (represented by the series of resistors 18 in the figures) in such a way that the electrical resistance between the first terminal 12 and the second terminal 14 decreases when the external pressure P applied to the pressure sensor exceeds one of the turn-on pressures. It shall be understood that the number of pressure-actuatable switching elements and corresponding resistors or resistive portions depends on the application and may be different from the number of these elements represented in the figures.

In Fig. 1, each pressure-actuatable switching element 16.1, 16.2, 16.3, 16.4 is arranged electrically in parallel to a respective resistive portion (represented as the resistors 18.1, 18.2, 18.3, 18.4) and these parallel arrangements of respectively a pressure-actuatable switching element 16.1, 16.2, 16.3 or 16.4 and a resistive portion 18.1, 18.2, 18.3 or 18.4 are connected electrically in series. For sake of illustration we may assume that the pressure-actuatable switching elements 16.1, 16.2, 16.3, 16.4 have the turn-on pressures $P_1$, $P_2$, $P_3$, $P_4$, with $P_1<P_2<P_3<P_4$. As long as the applied external pressure P remains below $P_1$ ($P<P_1$), the resistance between the first 12 and second terminal 14 amounts to the total resistance of the series of resistors 18. If the applied external pressure P lies in the pressure interval between $P_1$ and $P_2$ ($P_1<P<P_2$), the first pressure-actuatable switching element 16.1 is conductive (while the remaining ones are still insulating) and shunts the associated resistive portion, in this case resistor 18.1. The resistance between the terminals drops by the amount of $R_1$ since the resistances of the resistive portions 18.1, 18.2, 18.3, 18.4 are chosen to be much larger than the resistance of any switching element in its conductive state and, therefore, the resistance of the switching elements (in the substantially conductive state) can be neglected. As the applied external pressure P increases further, more and more of the pressure-actuatable switching elements 16.1, 16.2, 16.3, 16.4 switch into the conducting state and shunt their respective resistive portion of the resistive conductor 18. It follows that the electrical resistance between the first 12 and second terminal 14 then stepwise decreases. As those skilled will have noted, it is not necessary that the resistances of the pressure-actuatable switching elements 16.1, 16.2, 16.3, 16.4 are negligibly small. For the proper functioning of the pressure sensor, it is sufficient that the electrical resistances of the switching elements 16.1, 16.2, 16.3, 16.4 in the conductive state are substantially smaller than in the substantially insulating state. Preferably, they are also smaller than the resistances 18.1, 18.2, 18.3, 18.4.

Fig. 2 shows an alternative electrical circuit for a pressure sensor. The resistive conductor 18 again comprises a plurality of resistive portions interconnected in series between the first 12 and second terminal 14. In this case, the switching element 16.1 with the lowest turn-on pressure is arranged electrically in parallel to a first resistive portion (represented by resistor 18.1) so as to shunt the latter in case the applied external pressure P exceeds the respective turn-on pressure $P_1$. The switching element 16.2 with the second lowest turn-on pressure $P_2$ is arranged electrically in parallel to a second resistive portion (resistors 18.1 and 18.2) that includes the first resistive portion (resistor 18.1) without being equal to it. Each switching element with the next higher turn-on pressure is arranged in parallel to a resistive portion that includes the resistive portion the preceding switching element is connected in parallel with. Although the configuration is different from the configuration shown in Fig. 1, operation is substantially the same.

Fig. 3 shows a variant of the electrical circuit discussed with respect to Fig. 2. Other variants, in particular combinations of the circuits of Figs. 1 and 2 are of course also possible.

Turning now to Figs. 4 and 5, other alternatives of a pressure sensor circuit are represented. The resistive conductor (represented as the series of resistors 18.2, 18.3, 18.4) is electrically connected to the first terminal 12 and each one of the pressure-actuatable switching elements 16.1, 16.2, 16.3, 16.4 is connected between the second terminal 14 and an individual connection location 20.1, 20.2, 20.3, 20.4 of the resistive conductor (resistors 18.2, 18.3, 18.4). The resistive conductor presents, between each connection location 20.1, 20.2, 20.3, 20.4 and the first terminal 12, an effective electrical resistance that is connected, between the first 12 and second terminal 14, in series with one of the pressure-actuatable switching elements 16.1, 16.2, 16.3, 16.4. The connection locations 20.1, 20.2, 20.3, 20.4 are such that the effective resistances to which the pressure-actuatable switching elements are connected differ one from the other.

In Fig. 4, the resistive conductor comprises different resistive portions that are interconnected between the first 12 and second terminal 14, in series with one of the pressure-actuatable switching elements 16.1, 16.2, 16.3, 16.4, respectively. The pressure-actuatable switching element 16.1 with the lowest turn-on pressure $P_1$ is connected in series with the entire resistive conductor (resistors 18.2, 18.3, 18.4 with respective resistances $R_2$, $R_3$ and $R_4$), i.e. with the effective resistance $R_2+R_3+R_4$ The pressure-actuatable switching element 16.2 with the second lowest turn-on pressure $P_2$ is connected between the second terminal 14 and the connection location 20.2, which has been chosen such that the effective resistance between the first terminal 12 and the switching element 16.2 (i.e. the resistance of the series of resistors 18.3 and 18.4) is different from the resistance of the entire resistive conductor; in this case it amounts to $R_2+R_3$. The pressure-actuatable switching element with the next higher turn-on pressure is each time connected to a location such that the effective resistance between the first terminal 12 and that switching element is lower than the effective resistance between the first terminal 12 and the preceding switching element. As long as the applied external pressure P remains below the lowest turn-on pressure ($P<P_1$), the electrical resistance between the first 12 and the second 14 terminal is virtually infinite because all the pressure-actuatable switching elements 16.1, 16.2, 16.3, 16.4 are in a substantially insulating state. If the applied external pressure P lies in the interval from the lowest turn-on pressure P1 to the second lowest turn-on pressure $P_2$ ($P_1<P<P_2$), the first pressure-actuatable switching element 16.1 is substantially conductive and the resistance between the first and second terminal corresponds to the resistance of the resistive conductor $R_1+R_2+R_3$. If the applied external pressure lies between $P_2$ and $P_3$ ($P_2<P<P_3$), the measurable resistance between the two terminals is $R_2+R_3$. The more the applied external pressure increases, the more the resistance that can be measured between the terminals decreases. In the shown configuration, when the applied external pressure exceeds $P_4$, the effective resistance will become very low (~0 Ohms), because the fourth pressure-actuatable switching element 16.4 (which is assumed having a very low resistance in the substantially conductive state) shunts the entire resistive conductor (the resistors 18.2, 18.3, 18.4) between the terminals 12, 14.

Fig. 5 represents a variant of the circuit of Fig. 4. The pressure-actuatable switching element 16.1 with the lowest turn-on pressure $P_1$ is again connected in series with the entire resistive conductor. The other switching elements 16.2, 16.3, 16.4 are connected in parallel to an associated resistive portion of the resistive conductor, so that each resistive portion is shunted by the associated switching element if the applied external pressure exceeds the corresponding turn-on pressure. In fact, the circuit represented in Fig. 5 corresponds to the circuit shown in Fig. 1, except for the fact that no resistive portion is arranged in parallel to the pressure-actuatable switching element 16.1 with the lowest turn-on pressure.

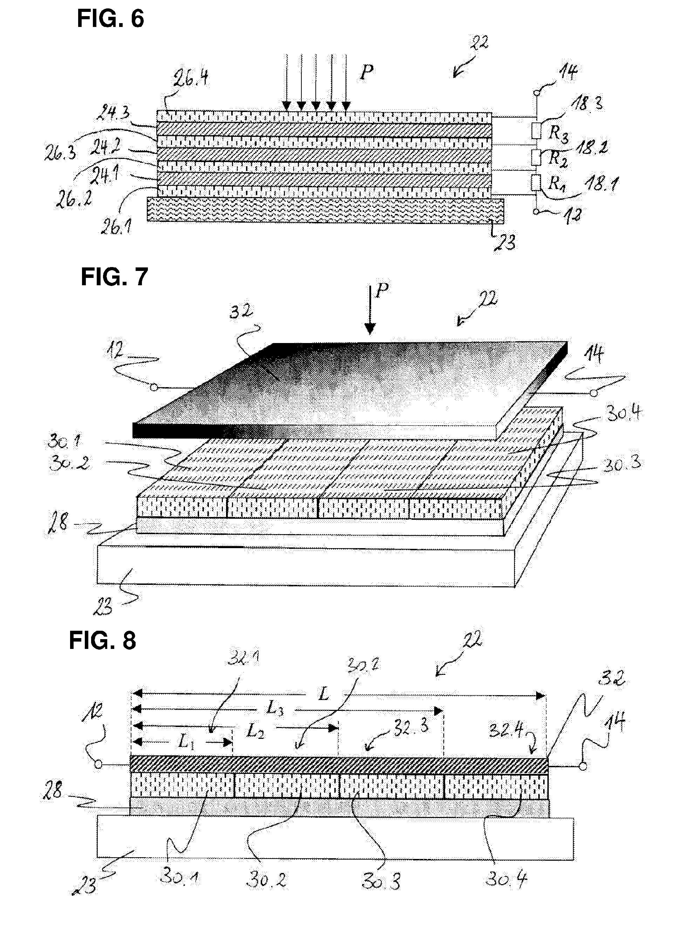

Detailed embodiments of pressure sensors will now be discussed with reference to Figs. 6-17. A first embodiment of a pressure sensor is represented in Fig. 6. The pressure sensor 22 is arranged on a substrate 23 and comprises several pressure sensitive polymer layers 24.1, 24.2, 24.3 arranged one above the other, wherein these polymer layers have different pressure thresholds $P_1$, $P_2$, $P_3$, above which they behave as an electric conductor. These thresholds decrease in direction from the substrate to the topmost layer, in other words, the threshold of polymer layer 24.3 is higher than the threshold of polymer layer 24.2, which, in turn is higher than the threshold of layer 24.1. Each pressure sensitive polymer layer 24.1, 24.2, 24.3, is sandwiched between two of the flexible or elastic conductive electrodes, 26.1, 26.2, 26.3, 26.4 so as to form a pressure-actuatable switching element. The bottommost electrode 26.1 is arranged on the substrate 23 and carries the first pressure sensitive polymer layer 24.1. The second electrode 26.2 is arranged on top of the pressure sensitive polymer layer 24.1 and carries the second pressure sensitive polymer layer 24.2. The latter, in turn, carries the third electrode 26.3, on which is arranged the third pressure sensitive polymer layer 24.3. A fourth electrode 26.4 is arranged on the third pressure sensitive polymer layer 24.3. Resistors 18.1, 18.2, 18.3 with electrical resistances $R_1$, $R_2$, $R_3$ are connected to the electrodes 26.1, 26.2, 26.3, 26.4 in such a way that a first resistor 18.1 is arranged electrically in parallel with the first pressure sensitive polymer layer 24.1, the second resistor 18.2 with the second pressure sensitive polymer layer 24.2 and the third resistor 18.3 with the third pressure sensitive polymer layer 24.3. Those skilled will note that the equivalent circuit diagram of the pressure sensor of Fig. 6 is shown in Fig. 1. An electric measurement circuit (not shown) is connectable to the first terminal 12 at the first electrode and the second terminal 14 at the fourth electrode to measure the electric resistance of the pressure sensor.

As long as no pressure is applied to the pressure sensor, or if the pressure applied is not sufficient for making at least one of the pressure sensitive polymer layers 24.1, 24.2, 24.3 conductive, the resistance of the pressure sensor 22, i.e. the resistance between the terminals 12, 14 corresponds to the resistance of the series of resistors 18.1, 18.2, 18.3, which is, in the case represented, $R_1+R_2+R_3$. If the applied pressure P is sufficient for making a pressure sensitive polymer layer 24.1, 24.2 or 24.3 conductive, the latter shunts the respective resistor mounted in parallel and the resistance between the contact points 12 and 14 is reduced. For instance, if the applied pressure P exceeds the thresholds of the first and second pressure sensitive polymer layers, they shunt the resistors 18.1 and 18.2, respectively. Consequently, the resistance of the pressure sensor 22 may drop to $R_3$.

Those skilled will appreciate that the reliability of the multilayered pressure sensor 22 may be increased by giving the conductive electrodes 26.1, 26.2, 26.3, 26.4 a comb-shaped layout and orienting them so that the teeth of two consecutive comb-shaped electrodes are perpendicular. Other electrode shapes might be equally well suited for increasing the reliability of the sensor 22.

It should also be noted that the pressure sensor 22 might additionally be covered with one or more protective layers.

Figs. 7 and 8 show an alternative embodiment of a pressure sensor 22. The pressure sensor 22 comprises an elongated strip of conductive material (hereinafter referred to as conductive electrode 28) arranged on a substrate 23 and several patches 30.1, 30.2, 30.3, 30.4 of pressure sensitive polymer material arranged on the conductive electrode 28. An elongated strip of resistive material (resistive electrode 32) sandwiches the pressure sensitive polymer patches 30.1, 30.2, 30.3, 30.4 together with the conductive electrode 28. The resistive electrode 32 is connected to a first 12 and a second 14 terminal at locations that are diametrically opposed on the resistive electrode 32. The shortest current path on the resistive electrode 32 between the connection locations of the first and second terminals 12, 14 defines a longitudinal direction on the resistive electrode 32. The term "longitudinal direction" thus refers to the direction of a current flowing through the resistive electrode 32 between the terminals 12, 14. Those skilled will note that the actual current path might be curvilinear depending on the shape of the resistive electrode 32. The pressure sensitive polymer patches 30.1, 30.2, 30.3, 30.4 are associated to defined resistive portions 32.1, 32.2, 32.3, 32.4 of the resistive electrode 32 along the longitudinal direction. The separation between two neighbouring resistive portions generally follows the course of the equipotential surfaces that would result in case of applying a potential drop between the first and the second terminals 12, 14.

In the particular case of Figs. 7 and 8, the resistive electrode 32 is rectangular and the shortest current path between the terminals is substantially straight. The pressure sensitive polymer patches 30.1, 30.2, 30.3, 30.4 are lined up along the longitudinal direction and extend parallel one to another transversally with respect to the longitudinal direction. The pressure sensitive polymer patches 30.1, 30.2, 30.3, 30.4 have the different pressure thresholds $P_1$, $P_2$, $P_3$, $P_4$, respectively, at which they become electrically conductive. As long as the applied external pressure applied to the sensor remains below the lowest pressure threshold $P_1$, the resistance between the terminals is the resistance of the entire resistive electrode. If however, the applied external pressure is sufficient to render at least one of the pressure sensitive polymer patches 30.1, 30.2, 30.3, 30.4 conductive, then the corresponding resistive portion or portions are shunted through the conductive pressure sensitive polymer patch and the conductive electrode 28 and the resistance measurable between the terminals 12, 14 is reduced by a corresponding amount.

As the conductive electrode 28 extends substantially over all the pressure sensitive polymer patches 30.1, 30.2, 30.3, 30.4, the latter should be arranged so that, along the longitudinal direction, each pressure sensitive polymer patch with a given pressure threshold is a direct neighbour to the group of pressure sensitive polymer patches with lower pressure thresholds. In this case it is assured that while the applied external pressure P increases, the shunted resistive portions of the resistive electrode 32 form a coherent group. Preferably, the pressure sensitive polymer patches 30.1, 30.2, 30.3, 30.4 are arranged along the longitudinal direction in order of growth of their respective pressure thresholds $P_1$, $P_2$, $P_3$, $P_4$. This is the case illustrated in Figs. 7 and 8, where $P_1 < P_2 < P_3 < P_4$.

If the applied pressure is smaller than the smallest pressure threshold, $P_1$ ($P < P_1$), the resistance R(P) between the terminals is equal to that of the resistive electrode 32:

$$R(P) = \rho L / A =: R_0 \, ,$$

where p is the resistivity of the resistive electrode, L is the total length of the resistive electrode 32 and *A* is the transversal cross-sectional area of the resistive electrode 32. The length of the resistive electrode can be expressed as L= $L_1$+ $L_2$+... + $L_N$, where N is the number of resistive portions (or pressure sensitive polymer patches), $L_1$, $L_2$ ... $L_N$ the widths of the resistive portions (or pressure sensitive polymer patches) in longitudinal direction. If the applied external pressure *P* exceeds the *i*-th pressure threshold but remains below $P_{i+1}$ ($P_i < P < P_{i+1}$) the first *i* pressure sensitive polymer patches are conductive and the corresponding resistive portions of the resistive electrode is shunted. The resistance R(P) measured between the terminals is in this case equal to:

$$R(P) = \rho\left(L - L_i\right)/ A =: R_i \, ,$$

where the lengths $L_i$ are defined as

$$L_1 = \Delta L_1; \quad L_{i+1} = L_i + \Delta L_{i+1}.$$

Those skilled will appreciate that a linear relationship between the measured resistance and the applied external pressure P can easily be achieved. The pressure can be linearly mapped on the resistance as $P_i = k(R_0 - R_i)$, where $k$ is a coefficient with the dimension Pa/Ohm whose absolute value may be chosen according to scales of the available measuring devices and where $R_0$ and $R_i$ are as defined in the above relations. This prescribes the following relation between the widths of the resistive portions in longitudinal direction and the differences $P_i - P_{i-1}$ from one threshold to the other:

$$\Delta L_i = \frac{A}{k\rho}(P_i - P_{i-1}).$$

Given the different pressure thresholds, the widths $L_i$ can thus be easily calculated by the above formula.

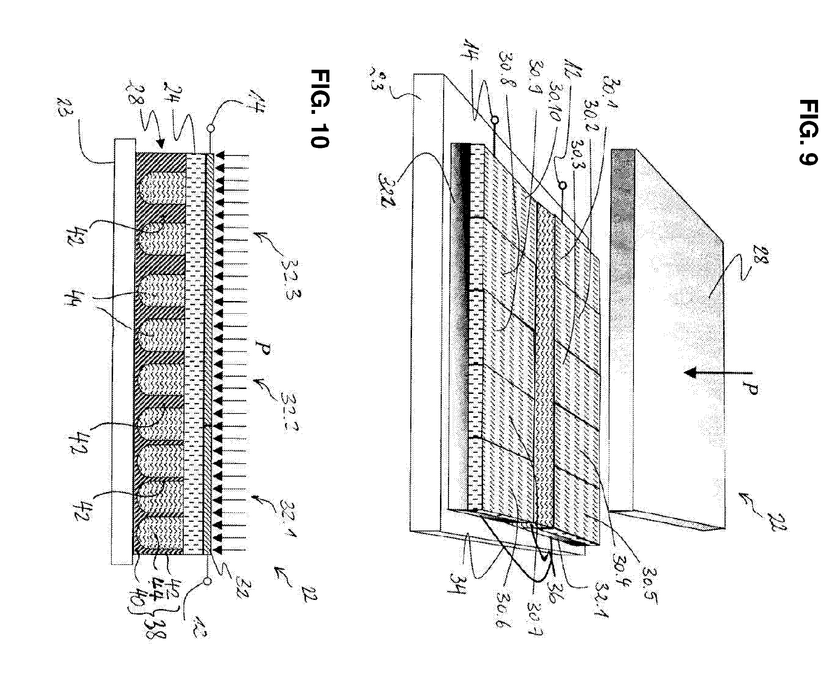

Fig 9 shows a 10-step pressure sensor 22 comprising a first elongated resistive electrode 32.1 and a second elongated resistive electrode 32.2 arranged on a substrate 23 and connected in series by wire 34. An insulating barrier 36 between the resistive electrodes 32.1, 32.2 ensures that the latter are electrically insulated from each other along their length. Pressure sensitive polymer patches 30.1-30.10 are arranged on the resistive electrodes 32.1, 32.2 in such a way that their respective threshold values $P_1$-$P_{10}$ increase from the terminal 12 to the terminal 14. The length of the patches 30.1-30.10 (i.e. their extension in the longitudinal direction) can be chosen as it has been described above with respect to Figs. 7 and 8. A common conductive electrode 28 is arranged on top of the pressure sensitive polymer patches 30.1-30.10 and the insulating barrier 36. If, in response to the applied external pressure, one or more of the pressure sensitive polymer patches 30.1-30.10 becomes conductive, the corresponding portion or portions of the resistive electrodes 32.1, 32.2 are shunted via the conductive electrode 28 and the resistance measured between the terminals 12 and 14 decreases. The pressure sensor of Fig. 9 thus operates in substantially the same way as the pressure sensor of Figs. 7 and 8.

As the insulating barrier 36 extends in height from the substrate 23 to the conductive electrode 28, there is a risk that it influences transmission of the external pressure P to the pressure sensitive polymer patches 30.1-30.10. In order to keep this influence as small as possible, Young's modulus of the insulating barrier 36 preferably does not exceed the smallest Young's modulus of the different pressure sensitive polymer patches 30.1-30.10. More preferably, however, the insulating barrier 36 is made from a material having at least a 10 times smaller Young's modulus than the pressure sensitive polymer patches 30.1-30.10.

Fig. 10 shows another embodiment of a pressure sensor 22. The pressure sensor 22 comprises a sandwich structure of an elongated resistive electrode, a pressure sensitive polymer layer 24 and a conductive electrode 28. In contrast to the previous pressure sensors, the pressure sensitive polymer layer 24 is not subdivided into different patches with different pressure thresholds. In the present embodiment, the conductive electrode 28 has a special configuration that enables shunting of different resistive portions 32.1, 32.2, 32.3 of the resistive electrode 32 at different levels of applied external pressure P. The conductive electrode 28 is implemented as a pressure amplifying structure 38 that comprises a plate element 40 and a plurality of bearing elements 42. The plate element 40 is arranged on the substrate 23, while the bearing elements 42 are arranged between the pressure sensitive polymer layer 24 and the plate element 40. When an external pressure P acts on the pressure sensor 22 as indicated by the arrows in Fig. 10, the resistive electrode 32 and the pressure sensitive polymer layer 24 are pressed onto the bearing elements 42 of the conductive electrode 28. The conductive electrode 28 transmits the reaction force of the substrate 23, which is opposed to the load resulting from the external pressure P. On the side of the pressure sensitive polymer layer 24, the bearing elements 42 have a cross-sectional area As smaller than the area A of the plate element 40. The pressure acting directly on the pressure sensitive polymer layer 24 is thus locally increased with respect to the applied external pressure. The ratio of the area A of the plate element 40 to the area $A_S$ of the bearing elements, i.e. the area in which the load is transmitted to the polymer patches as a pressure, is referred to as geometrical factor : =A/$A_S$. The amplification factor K is defined as the ratio of the pressure $P_t$ transmitted by the amplification structure to the pressure sensitive polymer layer or patch to the applied external pressure P: K=$P_t$/P. The geometrical factor corresponds to the amplification factor of the pressure under the assumption that the reaction force of the substrate 23 is only transmitted through the bearing elements 42. In particular, the amplification factor depends on the thickness of the bearing elements 42 and the interstices between them. If the amplifying structure 38 comprises a soft filler material 44 arranged between the bearing elements 42, the amplification factor depends on the mechanical properties of the filler material 44, the plate element 40 and the bearing elements 42, but remains proportional to the geometrical factor. It should be noted that the filler material 44 should have a lower Young's modulus than the bearing elements 42 otherwise the reaction force is transmitted preponderantly through the filler material 44. If one wishes to prevent reaction of the pressure sensor upon variations of atmospheric pressure, it may be preferable that the interstices are fluidly connected with the surroundings of the pressure sensor, e.g. through ventilation holes or channels (not shown in the figures).

As can be seen in Fig. 10, the thickness of the bearing elements 42 varies along the longitudinal direction of the resistive electrode 32. Consequently, different geometrical factors and thus different amplification factors $K_1$, $K_2$, $K_3$ are associated to different resistive portions 32.1, 32.2, 32.3 of the resistive electrode 32. In Fig. 10, the geometrical factor increases from left to right. As the choice of materials is the same over the entire pressure sensor 22, the amplification factors also increase from left to right. The pressure threshold $P_c$ of the pressure sensitive polymer layer 24 does not vary significantly over the area of the pressure sensor. As a consequence, to the i-th resistive portion of the resistive electrode is associated an i-th pressure-actuatable switching element with a respective turn-on pressure

$$P_i = P_c/K_i.$$

When no external pressure is applied to the pressure sensor 22, the resistance between the terminals is that of the entire resistive electrode 32. The pressure P is assumed to be applied homogeneously to the whole area of the pressure sensor. As soon as the applied external pressure P exceeds the first turn-on pressure $P_1 = P_c/K_1$, the first resistive portion 32.1 of the resistive electrode 32 is shunted through the pressure sensitive polymer layer 24 and the portion of the conductive electrode that has the highest amplification factor $K_1$. Increasing the applied external pressure P above the turn-on pressures $P_2$ and $P_3$ results in shunting of further resistive portions 32.2, 32.3 of the resistive electrode 32, which translates by a stepwise decrease of the resistance measured between the terminals 12, 14. As a result, the applied external pressure P is mapped on the resistance of the pressure sensor 22.

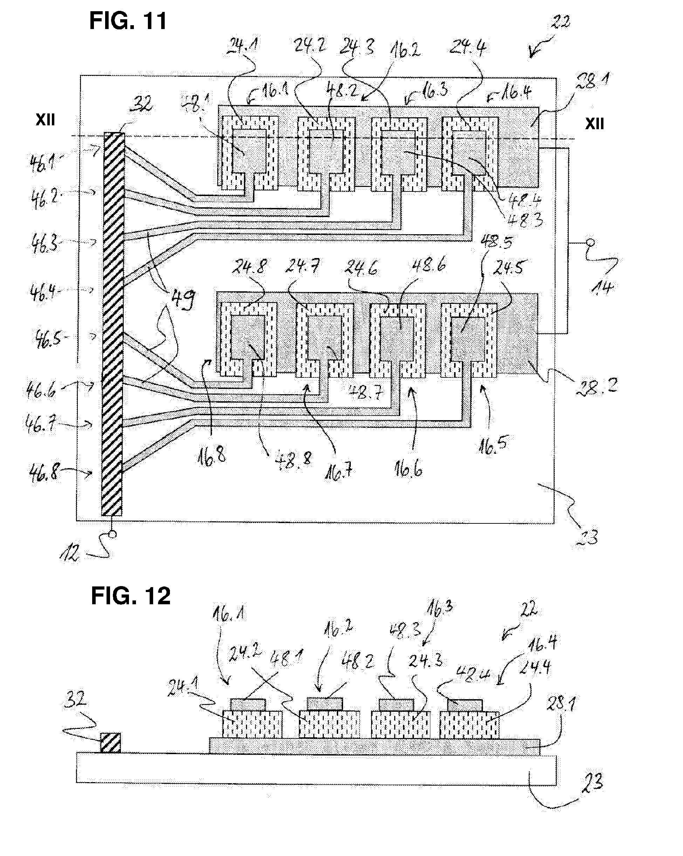

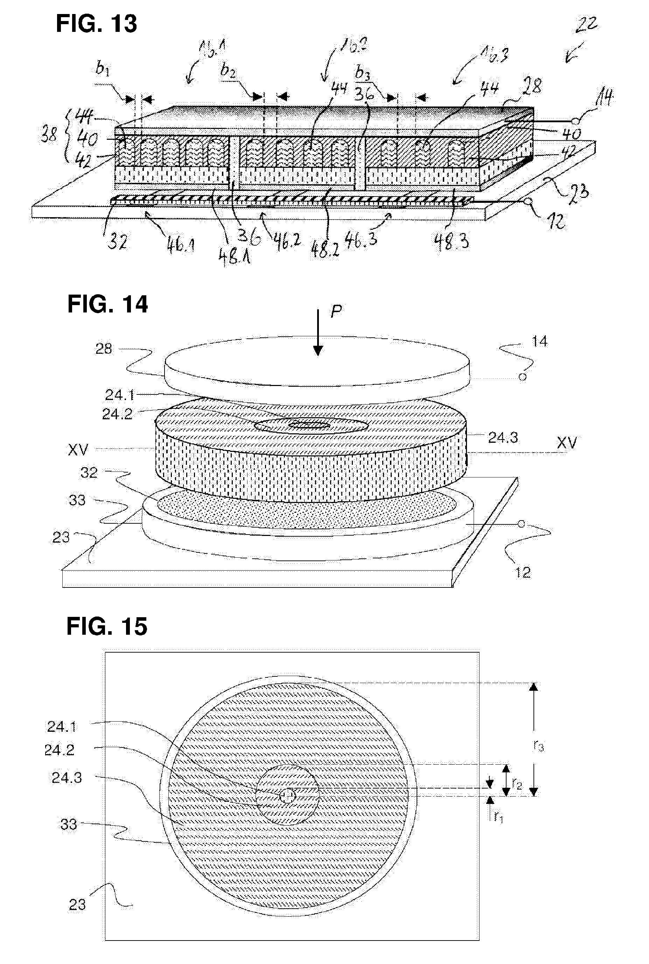

The pressure sensor shown in Fig. 11 and 12 is of the type generally discussed with respect to Fig. 4. The sensor comprises an elongated resistive electrode 32 arranged on a substrate 23. One end of the resistive electrode 32 is connected to the first terminal 12 of the pressure sensor 22. Pressure-actuatable switching elements 16.1-16.8 are connected at different connection locations 46.1-46.8 to the resistive electrode 32. The pressure-actuatable switching elements 16.1-16.8 have a first conductive electrode that is conductively connected to the second terminal 14 of the pressure sensor 22. In Fig. 11, this first conductive electrode is shown as two common conductive electrodes 28.1, 28.2 connected to the second terminal 14 of the pressure sensor. On these conductive electrodes 28.1, 28.2 are arranged several pressure sensitive polymer patches 30.1-30.8 with different pressure thresholds $P_1$ to $P_8$. Each pressure sensitive polymer patch 30.1-30.8 is sandwiched between one of the conductive electrodes 28.1, 28.2 and an individual second conductive electrode (hereinafter referred to as intermediate electrode) so as to form the pressure-actuatable switching elements 16.1-16.8. Each one of the individual intermediate electrodes 48.1-48.8 is connected to the resistive electrode via a conductive line 49. The distance on the resistive electrode 32 of the connection location 46.1-46.8 of each pressure-actuatable switching element 16.1-16.8 from the end where the first terminal 12 is connected increases with the turn-on pressure $P_i$ of the pressure-actuatable switching element 16.1-16.8. Thus, the pressure-actuatable switching element 16.1, which has the lowest turn-on pressure is connected at the greatest distance from the first terminal 12 and the pressure-actuatable switching element with the highest turn-on pressure 16.8 is connected at the smallest distance from the first terminal 12.

As long as the applied external pressure P remains below $P_1$, the circuit between the first and second terminal 12, 14 is interrupted. If the applied external pressure lies between $P_1$ and $P_2$, the current may flow from the first terminal 12 through the resistive electrode 32 and the first pressure-actuatable switching element 16.1 to the conductive electrode 28.1 and the second terminal 14 (or in reverse direction of course). The resistance between the terminals 12, 14 therefore corresponds to the effective resistance of the resistive electrode 32 between the first connection location 46.1 and the first terminal 12. If the applied external pressure P exceeds the second pressure threshold $P_2$ but remains below $P_3$, the resistive portion between the first connection location 46.1 and the second connection location 46.2 is shunted via the second pressure-actuatable switching element 16.2. The more pressure-actuatable switching elements are in their conductive state, the more the resistance between the first and the second terminals 12, 14 is reduced. In general, the measured resistance between the terminals 12, 14 corresponds to the resistance of that part of the resistive electrode 32 that is not shunted.

Those skilled will appreciate that neighbouring ones of the pressure sensitive polymer patches 24.1-24.8 need not necessarily be spaced from each other. This is however not the case for the intermediate electrodes 48.1-48.8, which must not be in direct electrical contact with each other. The space between adjacent intermediate electrodes might be filled with a soft electrically insulating material (not shown). Young's modulus of this soft material should not exceed the smallest of Young's moduli of the pressure sensitive polymer patches 24.1-24.8.

It will furthermore be noted that the lengths of the resistive portions between the different connection locations 46.1-46.8 may be chosen in such a way that the variation of resistance is proportional to the pressure differences $P_{i+1}-P_i$.

Fig. 13 shows another pressure sensor 22 of the type discussed with respect to Fig. 4. The sensor 22 comprises an elongated resistive electrode 32 arranged on a substrate 23. One end of the resistive electrode 32 is connected to the first terminal 12 of the pressure sensor. Pressure-actuatable switching elements 16.1, 16.2, 16.3 are connected at different connection locations 46.1, 46.2, 46.3 to the resistive electrode 32. The pressure-actuatable switching elements 16.1, 16.2, 16.3 have a common first conductive electrode 28 that is conductively connected to the second terminal 14 of the pressure sensor 22. Each pressure-actuatable switching element 16.1, 16.2, 16.3 comprises an individual intermediate conductive electrode 48.1, 48.2, 48.3 arranged on the substrate 23 and conductively connected to a particular connection location 46.1, 46.2, 46.3 of the resistive electrode 32. The first conductive electrode 28 and each intermediate electrode 48.1, 48.2, 48.3 sandwich a layered arrangement of a pressure sensitive polymer patch 24.1, 24.2, 24.3 and a pressure amplifying structure 38. The pressure sensitive polymer patches 24.1, 24.2, 24.3 are made of the same material, but the pressure amplifying structures 38 have different amplification factors for the different pressure-actuatable switching elements 16.1, 16.2, 16.3. As a result, the turn-on pressures of the different pressure-actuatable switching elements 16.1, 16.2, 16.3, i.e. those values of the applied external pressure P at which the switching into the substantially conductive state occurs, are different. The pressure-actuatable switching elements 16.1, 16.2, 16.3 are separated from each other by means of a soft spacer barrier 36, so that mechanical deformations occurring in one of the pressure-actuatable switching elements 16.1, 16.2, 16.3 have negligible dependence from the mechanical deformations in the neighbouring pressure-actuatable switching element.

Each one of the amplifying structures 38 comprises a conductive plate element 40 and conductive bearing elements 42. The bearing elements 42 are arranged between the plate element 40 and the pressure sensitive polymer patches and transmit the load resulting from the applied external pressure P to the respective pressure sensitive polymer patch. The geometrical factor $\alpha$, defined above as $\alpha=A/A_s$, i.e. as the ratio of the area A of the plate element 40 to the cross-sectional area $A_S$ of the bearing elements 42, corresponds to the amplification factor under the assumption that the load acting on the pressure sensitive polymer patch is only transmitted through the bearing elements 42. In particular, the amplification factor depends on the thickness of the bearing elements 42 and the interstices between them. If the amplifying structure comprises a soft filler material 44 arranged between the bearing elements 42, the amplification factor depends on the mechanical properties of the filler material 44, the plate element 40 and the bearing elements 42, but remains proportional to the geometrical factor . It should be noted that the filler material 44 should have a lower Young's modulus than the bearing elements 42 otherwise the load is transmitted preponderantly through the filler material 44. Again, if one wishes to prevent reaction of the pressure sensor upon variations of atmospheric pressure, it may be preferable that the interstices fluidly communicate with the surroundings or the pressure sensor.

The pressure-actuatable switching elements 16.1, 16.2, 16.3 have different values of the geometric factors $\alpha$. This is illustrated in that the bearing elements 42 have different widths $b_1$, $b_2$ and $b_3$. The pressure-actuatable switching elements 16.1, 16.2, 16.3 are connected to the connection locations 46.1, 46.2, 46.3 on the resistive electrode 32 in such a way that their geometric factors go increasing with the distance of the connection location 46.1, 46.2, 46.3 to the first terminal 12. Since for a given choice of materials (which is the same for the shown pressure-actuatable switching elements) the amplification factor $K$ is proportional to the geometric factor $\alpha$, the amplification factors of the pressure-actuatable switching elements 16.1, 16.2, 16.3 are also arranged in increasing order. The turn-on pressures of the different pressure-actuatable switching elements can be expressed, again as $P_i=P_c/K_i$, where $P_i$ is the turn-on pressure of the i-th pressure-actuatable switching element, $K_i$ the amplification factor of the i-th pressure-actuatable switching element and $P_c$ the pressure threshold of the pressure sensitive polymer patches. As long as the applied external pressure does not exceed $P_1$, none of the switching elements is in the substantially conductive state. If it lies within the range from $P_1$ to $P_2$, an electrical current may flow through the pressure-actuatable switching element 16.1 on the left in Fig. 13. The resistance that can be measured between the terminals thus amounts to the effective resistance of the portion of the resistive electrode between the first connection location 46.1 and the first terminal 12. If the second pressure threshold $P_2$ is exceeded, the resistance that can be measured between the terminals 12, 14 is reduced to the resistance of the portion of the resistive electrode 32 between the second connection location 46.2 and the first terminal 12.

As in the previously discussed pressure sensors, the number and the range of different turn-on pressures $P_i$ determines the achievable precision of the pressure measurement as well as the upper and lower limits, within which the applied external pressure P can be measured.

Figs. 14 and 15 show a pressure sensor 22 of generally cylindrical configuration. The pressure sensor comprises a first electrode arranged on a substrate 23, a layer of pressure sensitive polymer patches and a second electrode. At least one of the electrodes is resistive. In the present description we assume that the first electrode is resistive while the second one is conductive, but the reversed arrangement or an arrangement in which the two electrodes are resistive would also be possible. The resistive electrode 32 and the conductive electrode 28 sandwich several pressure sensitive polymer patches 24.1, 24.2, 24.3 arranged concentrically about the axis of the pressure sensor. The resistive electrode 32 is connected at its perimeter to a first terminal 12 of the pressure sensor and the conductive electrode 28 is connected to a second terminal 14. The first and second terminals 12, 14 can be connected to a measurement circuit. It should be noted that the resistive electrode 32 comprises a conductive (low-resistance) portion 33 extending along its perimeter so that the latter substantially forms an equipotential surface.

The different pressure sensitive polymer patches 24.1, 24.2, 24.3 have different pressure thresholds $P_1$, $P_2$, $P_3$ at which they become electrically conductive. The disk-shaped pressure sensitive polymer patch 24.1 on the axis of the pressure sensor has the lowest pressure threshold $P_1$. The annular pressure sensitive polymer patches 24.2, 24.3 are arranged so that the respective pressure thresholds $P_2$, $P_3$ go in ascending order from the axis to the periphery.

If the applied external pressure P is smaller than the lowest pressure threshold $P_1$ of the pressure sensitive polymer patch 24.1, all the pressure sensitive polymer patches 24.1, 24.2, 24.3 are insulating and the resistance measured between the terminals 12 and 14 is infinite. As soon as the applied external pressure exceeds the first threshold $P_1$ but remains below $P_2$, the central patch 24.1 becomes conductive, while the other patches 24.2 and 24.3 are still insulating. The resistance $R(P)$ between the terminals becomes that of the annular resistive portion with the inner radius $r_1$ and the outer radius $r_3$:

$$R(P) = \rho \log(r_3 / r_1)/(2\pi h) ,$$

where ρ is the resistivity of the resistive electrode 32, $h$ is the thickness of the resistive electrode 32. Analogously, if $P_2<P<P_3$, the resistance between the terminals 12, 14 becomes:

$$R(P) = \rho \log(r_3 / r_2)/(2\pi h) .$$

In the general case of $N$ concentric pressure sensitive polymer patches with respective radii $r_i$, 1 i N, the resistance can be expressed as:

$$R(P) = \rho \log(r_N / r_i)/(2\pi h) , \text{ for } P_i<P<P_{i+1}.$$

One can again achieve a linear mapping $P = -kR + C$ ($k$ being a constant with the dimension of Pa/Ohm whose absolute value is chosen according to the available scale of the measuring device and $C$ an off-set) of the resistance onto the applied external pressure. To achieve this, the choice of the radii has to be taken according to the relation:

$$\frac{r_{i+1}}{r_i} = \exp[q_1(P_{i+1} - P_i)], \text{ where } q_1 = 2\pi h /(k\rho) .$$

It can be seen that, if the differences $P_{i+1}-P_i$ remain approximately constant with increasing i, the ratio $r_{i+1}/r_i$ remains approximately constant and the difference $r_{i+1}-r_i$ thus grows exponentially with i. This imposes considerable limitations on the number of resistance steps (and thus the precision) that can be achieved in a pressure sensor of this configuration.

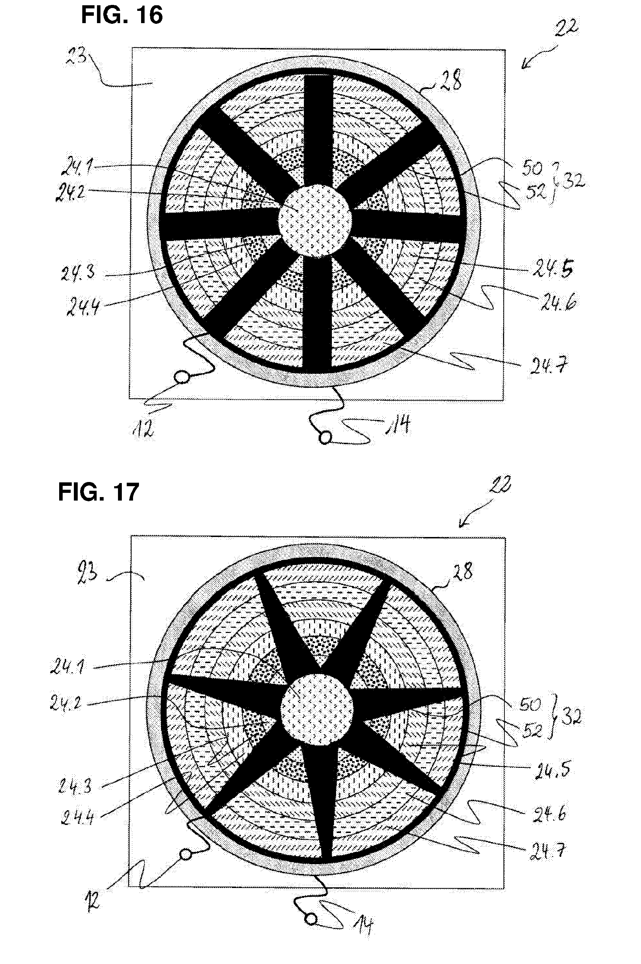

Figs. 16 and 17 show cylindrical pressure sensors 22 in which the resistive electrode 32 has been given a special shape in order to prevent exponential growth of the widths of the annular pressure sensitive polymer patches 24.1-24.7 with increasing radius.

The construction of the pressure sensors of Figs. 16 and 17 is generally similar to that of Figs. 14 and 15. The pressure sensors comprise a conductive electrode 28 (arranged on a substrate this time), a layer of pressure sensitive polymer patches 24.1-24.7 and a second, resistive electrode 32. The conductive electrode 28 and the resistive electrode 32 sandwich the pressure sensitive polymer patches 24.1-24.7 arranged concentrically about the axis of the pressure sensor. (More generally, the resistive electrode and the conductive electrode may sandwich a set of $N$ concentric annular pressure sensitive polymer patches that present pressure thresholds $P_1$ to $P_N$ respectively, where $P_1<P_2<...<P_N$.) The patches 24.1-24.7 are arranged so that the pressure thresholds $P_1$-$P_7$ increase from the axis of the pressure sensor to its periphery.

The resistive electrode 32 is connected at its border to a first terminal 12 of the pressure sensor and the conductive electrode 28 is connected to a second terminal 14. The first and second terminals 12, 14 can be connected to a measurement circuit.

The resistive electrodes 32 are of flower-shaped configuration and comprise a plurality of petals 50 extending radially from the innermost pressure-sensitive polymer patch 24.1 to the periphery of the sensor. At the periphery, the resistive electrode comprises a conductive ring 52 that connects the peripheral ends of the petals 50 to the first terminal 12.

The width of the petals in the direction transversal to the respective radial direction can be described by a function W(r). The precise form of this function can be chosen according to a desired distribution of the turn-on pressures of the pressure-actuatable switching elements implemented. For instance, in Figs. 16 and 17, the width of the petals W(r) varies as a function of the radius r from the axis according to the relation:

$$W(r) = \frac{1}{r_N - r_1}\{W_1 r_N - W_N r_1 + (W_N - W_1) \times r\},$$

where $r_1$ is the radius of the innermost pressure sensitive polymer patch, $r_N$ the radius of the outermost pressure sensitive polymer patch, $W_1$ is the width of the petals at the radius $r_1$, $W_N$ the width of the petals at the radius $r_N$. In the embodiment of Fig. 16, the width W(r) has been chosen constant as a function of r, as can be readily found by substituting $W_N = W_1$ in the above relation. In the embodiment of Fig. 17, $W_N$ has been chosen smaller than $W_1$; consequently, the width W(r) decreases linearly with increasing radius r.

If a linear relationship $P = -kR + C$ ($k$ being a constant with the dimension of Pa/Ohm whose absolute value is chosen according to the available scale of the measuring device and C an off-set) is required, the following condition must be fulfilled:

$$q_2(P_{i+1} - P_i) = \int_{r_i}^{r_{i+1}} \frac{dr}{W(r)} \text{, where } q_2 = mh/(k\rho),$$

(with m being the number of petals).

If we assume that between $r_i$ and $r_{i+1}$ W(r) is a smooth function, the condition (in first order approximation) simplifies to:

$$q_2 W(r_i)(P_{i+1} - P_i) = r_{i+1} - r_i.$$

For given $q_2$, given pressure thresholds $P_1$, $P_2$, ... and given radii $r_1$, $r_2$, ... of the pressure sensitive annular patches, the latter relation allows finding the widths $W(r_i)$ of the petals. If on the other hand, the widths $W(r_i)$ are known and the radii $r_1$, $r_2$, ... have to be determined, the relation can also be used. For example, if the petals have constant width, and the pressure thresholds $P_1$, $P_2$, ... are equally spaced, the difference $r_{i+1}$-$r_i$ has to be the same for all i to obtain a linear mapping of the resistance to the pressure thresholds.

**Claims**

1.   A pressure sensor comprising
a first and a second terminal,
a resistive conductor,
at least two pressure-actuatable switching elements, said at least two switching elements having different turn-on pressures, each of said at least two pressure-actuatable switching elements being in a substantially insulating state if an external pressure applied to said pressure sensor lies below a respective turn-on pressure and in a substantially conductive state if said external pressure applied to said pressure sensor lies above said respective turn-on pressure; wherein said at least two pressure-actuatable switching elements and said resistive conductor are connected between said first and second terminal in such a way that an electrical resistance between said first and second terminal decreases when the pressure applied to said pressure sensor goes over one of said turn-on pressures.

2.   The pressure sensor according to claim 1, wherein said at least two pressure-actuatable switching elements are stacked one on top of the other.

3. The pressure sensor according to claim 1 or 2, wherein said pressure-actuatable switching elements comprise at least two pressure sensitive polymer patches, said at least two pressure sensitive polymer patches having different pressure thresholds at which they become electrically conductive and wherein each one of said pressure-actuatable switching elements comprises one of said at least two pressure sensitive polymer patches.

4. The pressure sensor according to claim 1 or 2, wherein said pressure-actuatable switching elements comprise a pressure sensitive polymer layer and an amplification structure, said pressure sensitive polymer layer having different zones associated with said resistive conductor, wherein said amplification structure is arranged in such a way that, if an external pressure is applied to said pressure sensor, said different zones of said pressure sensitive polymer layer are exposed at least locally to different pressures increased by different amplification factors with respect to said external pressure, said amplification structure thus achieving different turn-on pressures.

5. The pressure sensor according to any one of claims 1 to 3, wherein said pressure-actuatable switching elements comprise at least two pressure sensitive polymer patches and at least two amplification structures each of said pressure sensitive polymer patches and each of said amplification structures being associated with one of said switching elements, wherein said amplification structures are arranged in such a way that, if an external pressure is applied to said pressure sensor, said pressure sensitive polymer patches are exposed at least locally to different pressures increased by different amplification factors with respect to said external pressure.

6. The pressure sensor according to any one of claims 1 to 5, wherein said pressure-actuatable switching elements comprise at least two pressure sensitive polymer patches and at least one amplification structure, said pressure sensitive polymer patches having different pressure thresholds at which they become electrically conductive, wherein each pressure sensitive polymer patch is associated with one of said switching elements and each of said at least one amplification structure is associated with one of said switching elements in such a way that said switching elements have said different turn-on pressures.

7. The pressure sensor according to any one of claims 1 to 6, wherein said resistive conductor includes at least two resistive portions and wherein said at least two pressure-actuatable switching elements are connected to said resistive conductor, each pressure-actuatable switching element being associated to a resistive portion in such a way that said resistive portion is shunted by said pressure-actuatable switching element if the pressure applied to said pressure sensor exceeds the respective turn-on pressure.

8. The pressure sensor according to claim 7, comprising
a series of at least three substantially parallel conductive layer electrodes arranged one above the other, each subsequent two of said conductive layer electrodes being resistively interconnected by one of said resistive portions of said resistive conductor;
at least two pressure sensitive polymer layers, each one of said at least two pressure sensitive polymer layers having an individual pressure threshold at which it becomes electrically conductive and each one of said at least two pressure sensitive polymer layer being sandwiched between subsequent two of said conductive layer electrodes so as to form one of said at least two pressure-actuatable switching elements.

9. The pressure sensor according to claim 7, wherein said resistive conductor comprises an elongated resistive electrode, said resistive electrode having a first end and a second end to which said first and second terminals are conductively connected and wherein said elongated resistive electrode includes said resistive portions to which said pressure-actuatable switching elements are associated.

10. The pressure sensor according to claim 9, wherein said pressure sensor comprises an elongated conductive electrode extending substantially parallel to said elongated resistive electrode and at least two patches of pressure sensitive polymer sandwiched between said resistive electrode and said conductive electrode, said at least two patches of pressure sensitive polymer having different pressure thresholds at which they become electrically conductive and being each associated to a respective one of said at least two resistive portions in such a way that, said pressure sensitive polymer patches form, in association with said conductive electrode and said resistive electrode, said pressure-actuatable switching elements.

11. Pressure sensor according to any one of claims 1 to 6,
wherein said resistive conductor is connected to said first terminal and
wherein each of said at least two pressure-actuatable switching elements is connected between the second terminal and an individual connection location of said resistive conductor, said resistive conductor having, between said first terminal and said individual connection location, an effective electrical resistance such that, in terms of circuitry, said pressure-actuatable switching element is connected between said first and second terminal in series with said effective electrical resistance,

and wherein the individual connection locations are such that the effective electrical resistances with which said at least two pressure-actuatable switching elements are connected in series are different.

12. The pressure sensor according to claim 11, wherein said resistive conductor comprises an elongated resistive electrode that includes said connection locations,

wherein said pressure-actuatable switching elements comprise at least one conductive electrode connected to said second terminal,

wherein each one of said pressure-actuatable switching elements comprises a pressure sensitive polymer patch and an intermediate electrode,

wherein said pressure sensitive polymer patches have different pressure thresholds and said intermediate electrodes are connected to different connection locations,

wherein, in each one of the pressure-actuatable switching elements, the respective intermediate electrode is arranged so as to be conductively connected with said at least one conductive electrode through the respective pressure sensitive patch when an external pressure applied to said pressure sensor exceeds the turn-on pressure of the respective pressure-actuatable switching element.

13. The pressure sensor according to claim 11, wherein said resistive conductor comprises an elongated resistive electrode that includes said connection locations,

wherein said pressure-actuatable switching elements comprise at least one conductive electrode connected to said second terminal and a pressure sensitive polymer layer,

wherein each one of said pressure-actuatable switching elements comprises an intermediate electrode and an amplification structure,

wherein said amplification structures are arranged in such a way that, if an external pressure is applied to said pressure sensor, said pressure sensitive polymer layer is exposed at least locally to different pressures increased by different amplification factors with respect to said external pressure, said amplification structures thus achieving different turn-on pressures for the different switching elements,

and wherein, in each one of the pressure-actuatable switching elements, the respective intermediate electrode is arranged so as to be conductively connected with said at least one conductive electrode through the pressure sensitive polymer layer when an external pressure applied to said pressure sensor exceeds the turn-on pressure of the respective pressure-actuatable switching element.

14. The pressure sensor according to claim 11, wherein said resistive conductor comprises a resistive electrode conductively connected at its perimeter to said first terminal, wherein said pressure sensor comprises a second electrode connected to said second terminal and at least two concentrically arranged pressure sensitive polymer patches sandwiched between said resistive electrode and said second electrode, said at least two pressure sensitive polymer patches having different pressure thresholds.

15. The pressure sensor according to claim 14, wherein said pressure thresholds increase from an innermost to an outermost of said at least two pressure sensitive polymer patches.

16. The pressure sensor according to claim 14 or 15, wherein said second electrode is a conductive electrode.

17. The pressure sensor according to any one of claims 14 to 16, wherein said resistive electrode is substantially flower-shaped, said resistive electrode having several petal-like portions extending radially from above an innermost pressure sensitive polymer patch to the perimeter of the resistive electrode.

18. The pressure sensor according to claim 17, wherein a width of said petal-like portions in the direction transversal to the radial extension of said petal-like portions varies along the radial extension.

19. The pressure sensor according to any one of claims 14 to 18, wherein said second electrode is a resistive electrode.

**FIG. 1**

**FIG. 2**

**FIG. 3**

**FIG. 4**

**FIG. 5**

**FIG. 6**

**FIG. 7**

**FIG. 8**

## FIG. 9

## FIG. 10

## FIG. 11

## FIG. 12

## FIG. 13

## FIG. 14

## FIG. 15

## FIG. 16

## FIG. 17

**European Patent Office**

**EUROPEAN SEARCH REPORT**

Application Number

EP 06 11 4544

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATENT ABSTRACTS OF JAPAN vol. 010, no. 080 (P-441), 29 March 1986 (1986-03-29) & JP 60 218045 A (TOSHIBA KK), 31 October 1985 (1985-10-31) | 1-3,7,8 | INV. G01L1/20 G01L1/18 H01H3/14 H01H13/70 G06F3/033 |
| Y | * abstract * * figures 1-4 * | 4-6,9-19 | |
| Y | US 5 986 221 A (STANLEY ET AL) 16 November 1999 (1999-11-16) | 4-6 | |
| A | * abstract * * figures 2-7 * * column 2, line 48 - column 3, line 32 * * column 4, line 1 - column 6, line 28 * * column 7, line 10 - column 8, line 56 * | 1-17 | |
| Y | US 2005/011738 A1 (SMITH TOBY E ET AL) 20 January 2005 (2005-01-20) * abstract * * paragraph [0035] * * paragraphs [0039] - [0052] * * paragraphs [0068] - [0070] * * paragraphs [0078] - [0080] * * paragraph [0086] * | 9-17 | |
| X | PATENT ABSTRACTS OF JAPAN vol. 010, no. 064 (P-436), 14 March 1986 (1986-03-14) & JP 60 205327 A (TOSHIBA KK), 16 October 1985 (1985-10-16) | 1-3 | TECHNICAL FIELDS SEARCHED (IPC) G01L H01H G06F B60N |
| Y | * abstract * * figures 2-9 * | 10-17 | |
| Y | US 2004/246094 A1 (BIECK WERNER ET AL) 9 December 2004 (2004-12-09) * abstract * * paragraphs [0001] - [0016], [0040] * * figures 3,5,7,12 * | 17-19 | |

-/--

The present search report has been drawn up for all claims

| Place of search | Date of completion of the search | Examiner |
|---|---|---|
| Munich | 25 July 2006 | Poizat, C |

EPO FORM 1503 03.82 (P04C01)

European Patent
Office

**EUROPEAN SEARCH REPORT**

Application Number

EP 06 11 4544

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 801 771 A (MIZUGUCHI ET AL) 31 January 1989 (1989-01-31) * the whole document * ----- | 1-19 | |

TECHNICAL FIELDS
SEARCHED      (IPC)

The present search report has been drawn up for all claims

| Place of search | Date of completion of the search | Examiner |
|---|---|---|
| Munich | 25 July 2006 | Poizat, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 06 11 4544

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2006

| Patent document cited in search report | | Publication date | Patent family member(s) | | Publication date |
|---|---|---|---|---|---|
| JP 60218045 | A | 31-10-1985 | NONE | | |
| US 5986221 | A | 16-11-1999 | GB | 2325746 A | 02-12-1998 |
| | | | JP | 2002513467 T | 08-05-2002 |
| | | | WO | 9829849 A2 | 09-07-1998 |
| US 2005011738 | A1 | 20-01-2005 | NONE | | |
| JP 60205327 | A | 16-10-1985 | NONE | | |
| US 2004246094 | A1 | 09-12-2004 | AT | 298458 T | 15-07-2005 |
| | | | DE | 60204777 D1 | 28-07-2005 |
| | | | DE | 60204777 T2 | 18-05-2006 |
| | | | WO | 02097838 A1 | 05-12-2002 |
| | | | EP | 1396001 A1 | 10-03-2004 |
| | | | ES | 2243749 T3 | 01-12-2005 |
| | | | JP | 2004532418 T | 21-10-2004 |
| | | | LU | 90783 A1 | 09-05-2003 |
| US 4801771 | A | 31-01-1989 | NONE | | |

EPO FORM P0459

For more details about this annex : see Official Journal of the European Patent Office, No. 12/82

**REFERENCES CITED IN THE DESCRIPTION**

**Patent documents cited in the description**

- US 20040163939 A1
- US 20040246094 A1
- JP 2002241591 A
- JP 2004013451 A
- JP 2003317545 A
- RU 2256967
- WO 2005076289 A1
- JP 20022415591 A